# EUROPÄISCHE PATENTANMELDUNG

(11) **EP 2 808 588 A1**
(43) Veröffentlichungstag der Anmeldung: **03.12.2014**
(21) Anmeldenummer: 13169388.9
(22) Anmeldetag: 27.05.2013
(51) Int. Cl.: F16K 31/12, F16K 31/06

(54) **Ansteuerung für ein Ventil**

(71) Anmelder: Siemens Aktiengesellschaft, 80333 München (DE)
(72) Erfinder: Dhima, Rachid, 45145 Essen (DE); Flohr, Ningsih, 45478 Mülheim an der Ruhr (DE); Huemer, Jörg, 46537 Dinslaken (DE); Kahl, Jan, 53804 Much (DE); Koch, Jennifer, 44789 Bochum (DE)

(57) **Zusammenfassung**

Die Erfindung betrifft eine Ansteuerung (1) für ein Ventil (2), wobei die Ansteuerung (1) als elektropneumatische Ansteuerung ausgebildet ist und daher in einem Ex-Bereich angeordnet werden kann.

## Beschreibung

Die Erfindung betrifft eine Ansteuerung für ein Ventil, wobei die Ansteuerung und das Ventil für einen Ex-Bereich ausgebildet sind.

Ventile, insbesondere Magnetventile, erfordern eine Ansteuerung, um einen Durchfluss zu steuern. Meist erfolgt diese Ansteuerung direkt und elektrisch. Allerdings werden Magnetventile beispielsweise im Generatorbau in Umgebungen eingesetzt, bei denen Umgebungstemperaturen von über 45° vorkommen können.

Außerdem existieren Bestimmungen wie beispielsweise die ATEX-und SIL-Bestimmungen. Diese Bestimmungen müssen eingehalten werden und somit ist die Einsatzmöglichkeit von direkten elektrischen Ansteuerungen von Magnetventilen eingeschränkt.

Es war bisher nicht möglich, bei einigen Magnetventilen aus materialtechnischen Gründen mit elektrisch betriebenen ATEXkonformen Ausführungen über 45°C einzusetzen.

Aufgabe der Erfindung ist es daher, eine Ansteuerung für ein Ventil anzugeben, das bei den vorgenannten Bedingungen eingesetzt werden kann.

Gelöst wird diese Aufgabe durch eine Ansteuerung für ein Ventil, wobei die Ansteuerung und das Ventil für einen Ex-Bereich ausgebildet sind, wobei die Ansteuerung als elektropneumatische Ansteuerung ausgebildet ist.

Vorteilhafte Weiterbildungen sind in den Unteransprüchen angegeben.

Somit wird erfindungsgemäß vorgeschlagen, die direkte elektrische Ansteuerung durch eine elektropneumatische Ansteuerung zu ersetzen.

Durch die Entkopplung des elektrischen und pneumatischen Antriebs wird eine Auslagerung der elektrischen Einheit außerhalb des Ex-Bereichs ermöglicht. Dies wiederum erweitert den Temperaturbereich der elektrischen Steuerung. Ein Einsatzbereich bei über 45°C wäre demnach ohne Einschränkung möglich.

Des Weiteren weisen elektropneumatische Ventile eine höhere Betriebssicherheit auf. In der Regel sind elektropneumatische Ventile günstiger als die direkten elektrischen Ansteuerungen, wodurch eine Kostenersparnis erfolgt.

In einer ersten vorteilhaften Weiterbildung ist das Ventil als ein Magnetventil ausgebildet.

In einer weiteren vorteilhaften Weiterbildung umfasst die elektropneumatische Ansteuerung eine elektrische Vorsteuerung.

In einer weiteren vorteilhaften Weiterbildung ist die elektrische Vorsteuerung außerhalb des Ex-Bereichs angeordnet.

Die Erfindung wird nun anhand eines Ausführungsbeispiels näher erläutert.

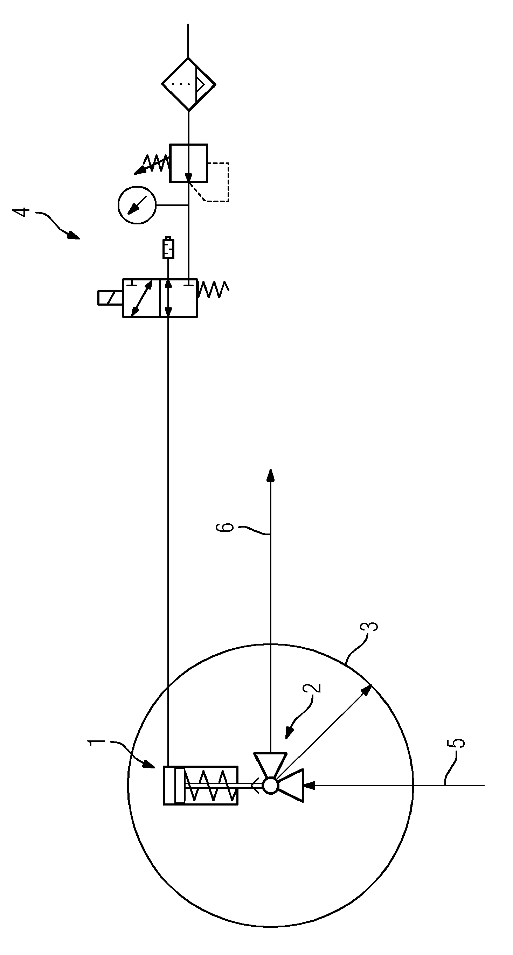

Die Figur zeigt in schematischer Weise eine erfindungsgemäße Ansteuerung.

Die Figur zeigt eine Ansteuerung 1. Diese Ansteuerung 1 ist für ein Ventil 2 ausgebildet, wobei das Ventil 2 als ein Magnetventil ausgebildet ist.

Das Ventil 2 und die Ansteuerung 1 sind in einem Ex-Bereich 3 angeordnet. Der Explosionsschutz ist ein Teilgebiet der Technik, das sich mit dem Schutz vor der Entstehung von Explosionen und deren Auswirkungen beschäftigt. Unter dem Ex-Bereich ist somit ein Bereich zu verstehen, in dem eine explosionsfähige Atmosphäre auftreten könnte. Somit soll erfindungsgemäß die Verhütung von Schäden durch technische Produkte, Anlagen und anderen Einrichtungen an Personen und Sachen verhindert werden.

Die Ansteuerung 1 ist als eine elektropneumatische Ansteuerung ausgebildet und kann daher innerhalb des Ex-Bereichs 3 angeordnet werden. Grundlagen zum Ex-Bereich sind gesetzliche Bestimmungen, wie z.B. die ATEX-Richtlinien der europäischen Union und der National Electrical Code (NEC) in den USA.

Des Weiteren ist eine Vorsteuerung 4 außerhalb des Ex-Bereichs angeordnet, der zur Ansteuerung der elektropneumatischen Ansteuerung ausgebildet ist.

Das Ventil regelt einen Zufluss 5 und einen Abfluss 6.

Die Ansteuerung wird in einem elektrischen Generator verwendet, insbesondere in einem mit Wasserstoff gekühlten elektrischen Generator.

## Patentansprüche

1. Ansteuerung (1) für ein Ventil (2),
wobei die Ansteuerung (1) und das Ventil (2) für einen Ex-Bereich ausgebildet sind,
**dadurch gekennzeichnet, dass**
die Ansteuerung (4) als elektropneumatische Ansteuerung ausgebildet ist.

2. Ansteuerung (1) nach Anspruch 1,
wobei das Ventil (2) als Magnetventil ausgebildet ist.

3. Ansteuerung (1) nach Anspruch 1 oder 2,
wobei die elektropneumatische Ansteuerung eine elektrische Vorsteuerung (4) umfasst.

4. Ansteuerung (1) nach Anspruch 3,
wobei die elektrische Vorsteuerung (4) außerhalb des Ex-Bereichs angeordnet ist.

5. Verwendung der Ansteuerung (1) nach einem der Ansprüche 1 bis 4
in einem elektrischen Generator.
